# EUROPEAN PATENT APPLICATION

(11) **EP 1 488 944 A1**
(43) Date of publication of application: **22.12.2004**
(21) Application number: 03748149.6
(22) Date of filing: 16.09.2003
(51) Int. Cl.: B60J 5/04, B60R 13/08

(54) **SUPPORT MODULE WITH IMPERVIOUS CLOSURE FOR VEHICLE DOORS AND METHOD OF MOUNTING SAID MODULE**

(71) Applicant: Grupo Antolin-Ingenieria, S.A., 09007 Burgos (ES)
(72) Inventor: GOMEZ CAMARA, David, 09001 BURGOS (ES); GARCIA GARC A, Rafael, 09003 BURGOS (ES); DOMINGUEZ RUBIO, Francisco, 09007 BURGOS (ES); SANTAOLALLA GIL, Joaquin, 09003 BURGOS (ES); MARTINEZ MORAL, Francisco, Javier, 09002 BURGOS (ES)
(74) Representative: Esteban Perez-Serrano, Maria Isabel
(86) International application number: PCT/ES2003/000466
(87) International publication number: WO 2004/035336

(57) **Abstract**

The present invention relates to a supporting module with waterproof seal for vehicle doors mainly comprised of a flexible laminar element (2) that can establish a waterproof seal between the wet and dry sides of the door (1), also meant to facilitate the mounting tasks of each component. The flexible laminar element has a sufficient supporting capacity to allow a preliminary mounting on it of the various door components for a subsequent installation of the entire assembly on the door in a single operation; however, the strength and structural capacities of the door continue to rely on its reinforcements and ribs, and not on the flexible laminar element, thereby allowing a cheaper and simpler laminar element and assembly as a whole.

## Description

### OBJECT OF THE INVENTION

The object of the present invention relates to a supporting module with waterproof seal for vehicle doors and the mounting procedure for said module, in which this module is intended to simplify the mounting tasks of several functional elements for motor vehicle doors.

This module is characterised by a non-structural flexible laminar element with sufficient supporting capacity to allow mounting various door components on it, for the subsequent installation of the entire module on such door. This assembly or module provides the waterproof sealing function, separating the dry and wet parts of the door.

This module is characterised by a special design that means it will not have any structural role, this function belonging to the door, thereby allowing a reduction in the cost of the material used to manufacture the laminar element of the module.

It is also characterises a module configuration adapted to the door configuration to establish a waterproof seal on it.

Lastly, it characterises a special configuration of the attachment of the window lift rails that reduces the space required, allows a simple assembly and does not affect the waterproof nature of the seal.

Also pertaining to the invention is the procedure for mounting the module on the door, in which the first operations for introducing the laminar element in the door space are facilitated by the flexibility of the material used.

### BACKGROUND OF THE INVENTION

There are several supports known in the market for supporting components that must be installed in a vehicle door.

These solutions are generally specifically conceived to act as support for a given group of door elements, in their majority, or instead have a supporting function, providing partial seals between the wet and dry areas or only fulfilling a single function, structural, and occasionally a waterproofing function.

In all of these known solutions this structural function requires a complex design of both the support itself and the structure of the entire door, particularly at the points for attaching the support and the remaining elements requiring a structural attachment.

Because of this, this solution requires specifications that make it costly and complicated, due to the materials employed and to the configuration itself.

Certain more modern solutions exist that tend to integrate a greater number of elements on the support in order to reduce manufacturing costs.

Among these solutions is Patent JP2002264652, which describes a support module incorporating reinforcements and other structural elements in addition to the door components installed on it.

Patent WO200230695 consists of a structural support that includes the functional door components as well as fulfilling the door sealing functions, separating the dry and the wet area. It establishes as essential elements of the invention areas of the structural support for anchoring functional elements that transmit loads directly to this structural support.

Of interest is the solution adopted by US Patent 6493919, which makes use of a structural support with a sealing gasket that peripherally embraces the edge of the support plate and that includes a special anchoring means of the lock, in order to allow a simple integration in the module. This module also incorporates attachments for the window lift rails, implying that the module must withstand all of the loads transmitted by these during their operation.

US Patent 6571515 describes a support mounted inside a door that incorporates a particular design of the window lift rails and the door such that the rails are incorporated frontally on the upper part on recesses admitting them. This solution forces a configuration of the anchoring that is incorporated inside the recess. In addition, this anchoring is restricted in that it must not exceed the support perimeter on the top.

Also known is the support described in US Patent 6029403, designed to incorporate on a door with a horizontal central reinforcement, incorporating corner anchorings. The support consists of a plate with two horizontal ribs that allow incorporating the window lift rails as well as the lock. The window lift rails are anchored to the support of the invention, which has sufficient structural capacity to support the rails and the loads to which they are subjected.

In the present invention a supporting, non-structural module is described with a waterproof sealing function that separates the dry and the wet parts, relegating all structural functions to the door, specifically that of the window lift rails and the door handle. This, together with the fact that the door handle, if it is placed on the supporting module, and the rails extend beyond the perimeter of the supporting module requires specific solutions for the attachment means, the distribution of the elements and each of the solutions adopted for ensuring the seal. All of these functions are simultaneously provided in the supporting module described in what follows.

### DESCRIPTION OF THE INVENTION

The present invention relates to a supporting module with waterproof seal for vehicle doors and to the mounting procedure for this module. The supporting door module consists of a flexible, non-structural laminar element that can establish a waterproof seal in the inner access openings made for mounting the door components, as well as incorporating various functional elements of the door.

The supporting nature of the module means that it is strong enough to support the components it incorporates during its assembly on the door, but it does not contribute to the structural strength of the door.

Each element requiring a structural attachment, such as the window lift rails, the lock or the door handle, must transmit the loads directly to the door structure, so that they are attached to the latter, and thus must be provided with the necessary anchoring means to said door. Likewise, the door is provided with a structural part for anchoring these elements. The supporting module does help position the components it includes that must be anchored to the door.

This module covers all of the internal access openings of the door, thereby achieving a fully waterproof seal between the dry and wet areas. The bearing flexible laminar element is provided with the means needed to establish a waterproof seal throughout the door perimeter: sealing gaskets and pressure attachment means that apply a minimum pressure at all the points where there is a sealing gasket or at each through orifice for a bolted union. At these through orifices the minimum pressure ensured by the attachment means between the devices to be joined, the flexible laminar element and the door are enough to provide a waterproof seal at these points. Elements passing from the wet to the dry area are provided with the necessary sealing gaskets to ensure the module waterproof seal. Other orifices required on the laminar element are provided with covers to ensure the module waterproof seal.

In what follows, several aspects characterising the invention are mentioned:
- To overcome the drawbacks of lack of vision and access to the window lift rails, the door and the rails are provided with self-centering means that facilitate the operations for mounting the rails on the door.
- The upper part of the window lift rails project towards the outer or wet area on the top of the door, and the bottom part of these rails must be such that their mounting ensures the waterproof seal. This is achieved by making the bottom end of each rail reach above the edge limiting the inner door space, surpassing the main plane of the space until reaching the dry area.
- The module's surface area is such that it covers all of the inner door space, so that the manoeuvring space for incorporating the handle, if it is incorporated in the module, is limited.

This handle is attached to the flexible laminar element, extending beyond its perimeter. During the installation operation, the lock is inserted first past the edge of the inner door space; then the flexible laminar element is lifted until the top end of the window lift rails are inserted, which also extend beyond the perimeter of the flexible laminar element, past the edge of the inner door space. Once the lock is in its mounting position, the centering elements of the flexible laminar element of the module allow to set in place the upper and lower parts of the rails. These, in turn, are provided with self-centering means for their mounting on the door.

The flexibility of the laminar element of the module facilitates its mounting on the door.

- A waterproof seal must be ensured at all points where the wet area and the dry area may connect. The solutions used for each specific case are the following:
- *Peripheral union*
   The flexible laminar element is provided with several tightening points along its perimeter and near it. These tightening points establish a minimum pressure on all points of a peripheral gasket that adapts to the surface and hollow outline of the door housed in a channel to ensure the waterproof seal.
- *Loudspeaker*
   The loudspeaker waterproof seal is ensured by including a peripheral gasket on the loudspeaker support.
- *Lock*
   The lock is attached to the module laminar element by bolts, rivets or anchorings that are not in communication with the wet area. When bolted unions exist they shall ensure the waterproof seal by the union pressure.
- *Electrical motor drum cover and assembly orifices*
   The waterproof seal is achieved by the pressure of the assembly bolts.
- *Window lift rails*
   These are entirely within the wet area, including their lower ends, due to a recess of the laminar element that allows access to the door structure on the side facing the dry area. In this bottom end the rail is interposed between the door and the flexible laminar element. The rails are anchored at the upper and lower parts by bolts, and the pressure exerted by this union is enough in both cases to ensure the waterproof seal between the dry and wet areas.
- *Flexible elements such* as *electrical cables*
   Sealing gaskets are used in the through orifices from the wet side to the dry side. These sealing points may be included in the flexible laminar element.
- *Access orifices for mounting the window*
   These are two orifices placed on the top of the laminar element that allow accessing the bolts of the tabs securing the window to the window lift rails. After the window has been installed these orifices are sealed by elastomer lids that ensure the waterproof seal. These sealing lids can also be included in the flexible laminar element.

As there are no important structural requirements in the design characteristics, it is possible in the construction of the flexible laminar element to use materials with low mechanical and structural requirements and with a very low cost. Among possible materials to be used are recycled plastics, single or multiple layer textiles reinforced with plastic materials during printing and other low-cost materials. The selected material can be such that the laminar element provides a sound insulation function.

Known in the field are devices for absorbing the energy of an impact, such as deformable cones. Also the object of the invention is the possible inclusion of these in the flexible laminar element. If moulded plastics are employed the impact energy absorption device can be configured in the same body, or in this and in other cases it may be incorporated as an additional piece.

Courtesy lights, indirect lighting and other electrical accessories are elements that may also be included in the module, following the strategy of mounting the elements on the supporting module for the subsequent incorporation of the entire assembly on the door.

Doors often include a pouch on the inside used to store documents. The present invention also considers the possibility of the flexible laminar element including the configuration of the base of the document pouch.

### DESCRIPTION OF THE DRAWINGS

The present descriptive memory is accompanied by a set of drawings for purposes of illustrating the preferred example in a non-limiting sense.

Figure 1 shows an elevation view of the inner face of the door and thus of the dry area, including an embodiment of the supporting element with a waterproof seal according to the invention.

Figure 2 shows an elevation view of the external face of the door and thus of the wet area, an embodiment of the bearing element with a waterproof seal according to the invention.

Figure 3 shows an elevation of the supporting module with a waterproof seal seen from the face corresponding to the dry area with the various installable elements incorporated.

Figure 4 shows an elevation of the supporting module with a waterproof seal seen from the face corresponding to the wet area with the various installable elements incorporated.

Figures 5 shows four types of attachments for the window lift rails with self-centering means.

### PREFERRED EMBODIMENTS OF THE INVENTION

The invention consists of a supporting module with a waterproof seal for vehicle doors, intended for installation on a door including all of the resistant elements required.

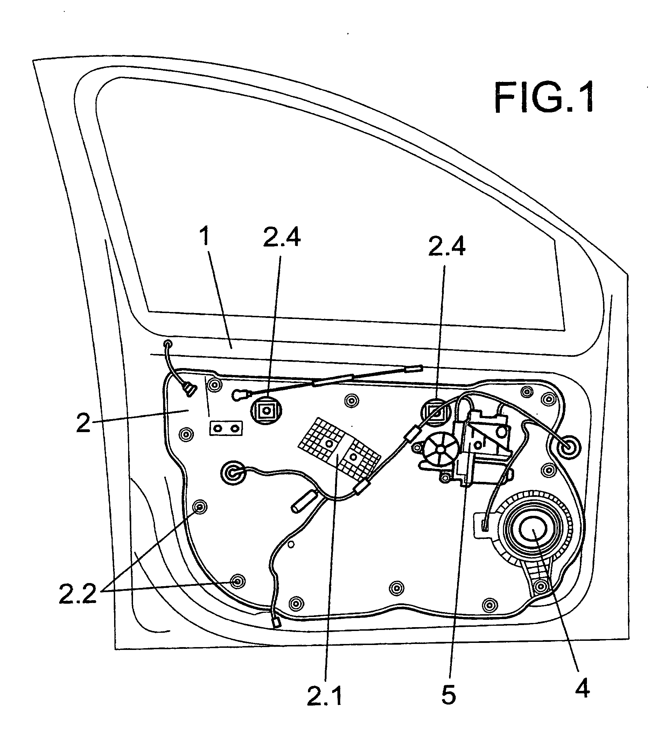

Figure 1 shows the door (1) and the supporting module object of the invention. This figures represents an inner view corresponding to the dry area. This is the side on which the operator will assemble it.

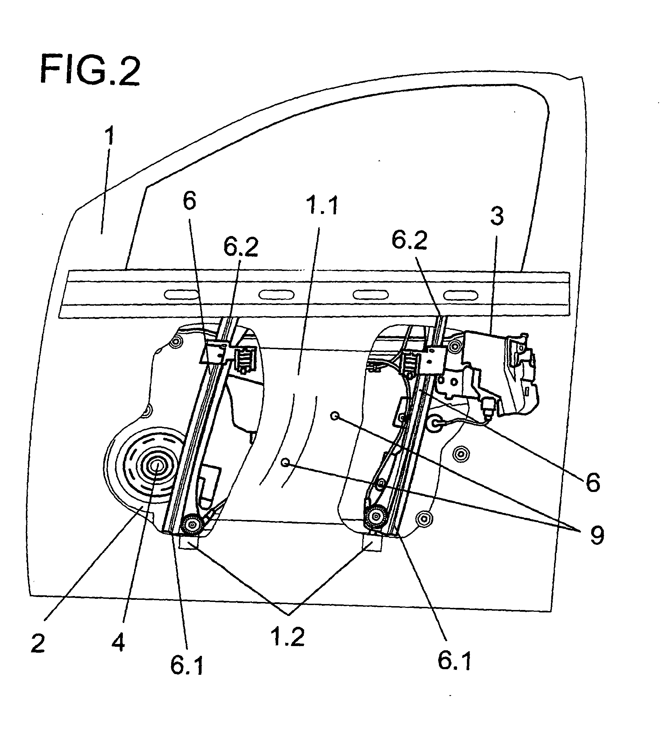

The door (1), as shown in figure 2, includes a central vertical reinforcement (1.1). The central reinforcement (1.1) leaves spaces on either side through which may pass the window lift rails (6) and the loudspeaker (4), if one is integrated in the module, through one of the spaces, and the lock (3), if it is integrated in the module, through the other space. The lock (3), as shown in figure 2, must be inserted in first place past the inner edge of the space to then allow entry of the upper ends (6.2) of the rails (6) by an upward motion of the module assembly. After placing the module centering elements (9), the bottom ends (6.1) of the window lift rails (6) are brought in until they are placed on the anchoring (1.2) of the lower part of the space of the door (1).

As will be described later on, the projection of these bottom ends (6.1) of the window lift rails (6) toward the dry area allows the correct orientation of the rails (6) as well as saving a considerable amount of space.

Figure 1 shows the upper orifices (2.4) of the flexible laminar element (2) without its lids (8) in order to allow attaching the window on the upper anchorings of the window lift rails (6).

The module comprises a bearing and flexible laminar element (2), modelled or stamped, not structural but having sufficient strength to operate independently of the door (1), allowing mounting the various components on said element.

Its outer perimeter is adapted to the shape of the space to be covered and is provided throughout with orifices (2.2) for joining it, with either bolts or clips, and with a groove (2.3) to house a sealing gasket.

In this preferred embodiment, the laminar element (2) is provided with a spacer (2.1) that supports the handle that is in fact a passage for the bolted union to the door (1) structure, directly transmitting to it the loads through the aforementioned support area. Although this support spacer (2.1) is reinforced by a set of ribs, this is a local reinforcement that does not imply resistance functions for the flexible laminar element (2). It would be possible to use a spacer (2.1) consisting of an independent part, in the understanding that the invention would use such spacer (2.1) in both cases.

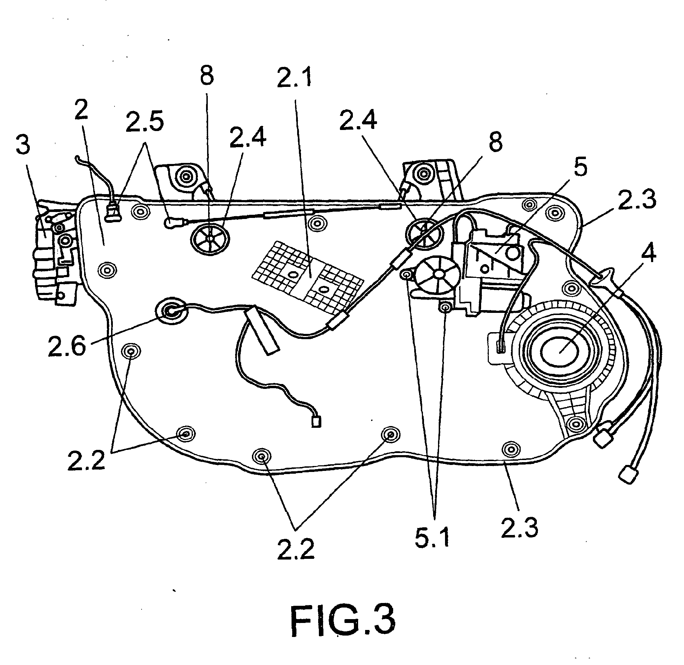

Figure 3 shows the inclusion of the flexible laminar element (2) and the motor (5) driving the drive chain of the window lift with its anchoring bolts (5.1), the loudspeaker (4) with a local reinforcement around it to absorb inertial loads that is in turn attached with a union including a peripheral sealing gasket.

Also shown in this figure are the lids (8) covering the orifices (2.4) of the flexible laminar element (2) to facilitate the installation operation of the window on the window lift rails (6). The closures and sealing gaskets are included in the same flexible laminar element (2) of the module.

Next to the lock (3) can be seen two sealing gaskets (2.5) for the safety lock and the inner closing cable that allow regulating the waterproof seal at these points, as this embodiment incorporates the lock (3) and the elements for transmitting the door (1) locking, opening and closing operations.

Below these sealing gaskets (2.5) are also shown flexible seals (2.6) for the passage of cables from the wet to the dry area. Among these cables is at least that of the window lift motor (5).

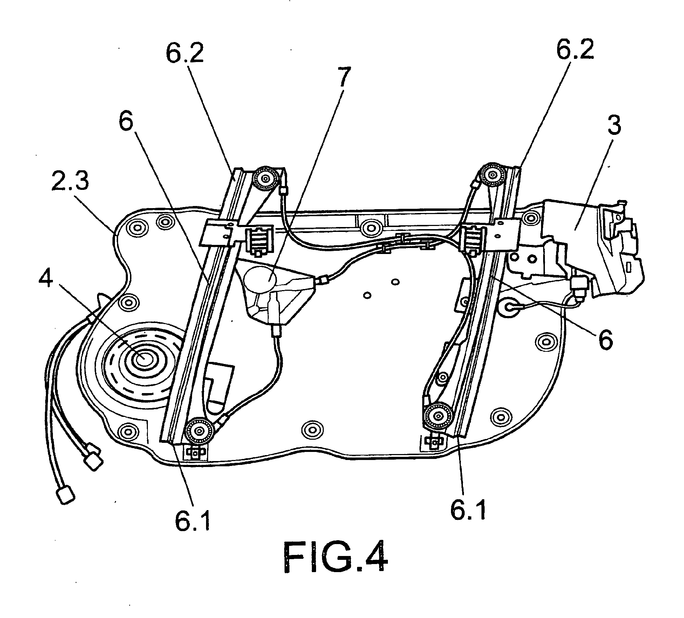

Figure 4 shows the opposite face of the supporting module corresponding to the wet area. Seen on this side, in addition to the loudspeaker (4), the lock (3) and the window lift rails (6), is the lid of the drum (7) of the window lift drive chain.

The flexible laminar element (2) can optionally provide attachment elements for flexible elements such as cables that ensure their position and do not establish a communication between the two sides.

### On the means for attaching and centering the window lift rails (6)

As the flexible laminar element (2) of the bearing element covers all of the space of the door (1), it is necessary to provide the means to ensure in the installation of the module a correct positioning and subsequent attachment of the window lift rails (6), as these are on the other side of the flexible laminar element (2) and therefore beyond their reach to manipulate them.

In the flexible laminar element (2) mounting operation the upper part (6.2) of the rail (6) and the lock (3), if incorporated in the module, respectively extend beyond the upper and lateral edges of the door (1) space, so that said laminar element (2) is raised to place its centerers (9) in their housings, the upper elements (6.2) of the rails (6) are placed, followed by the lower elements (6.1) and lastly the attachment is provided.

The window lift rails (6) may be fixedly attached to the flexible laminar element (2) of the module or they may be given certain degrees of freedom by a combined use of grooves on the rails and pivots on the flexible laminar element (2). The extent of these degrees of freedom shall depend on the length of the pivots and grooves. These means of attachment between the flexible laminar element (2) and the rails (6) are only necessary to carry out the assembly operations of the module, as the union to the bearing structure is performed at the ends (6.1) and (6.2) and directly on the door (1).

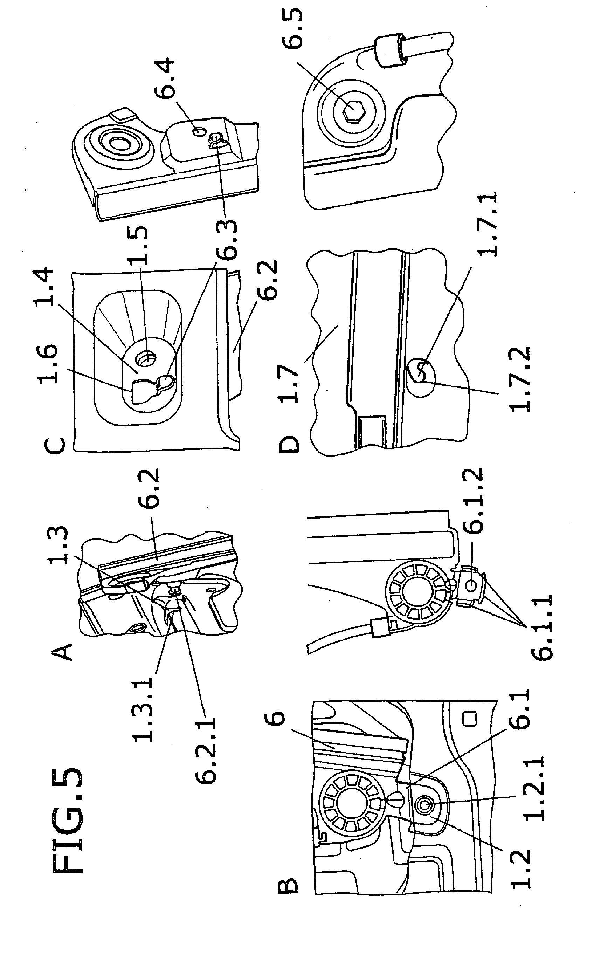

As regards the self-centering and positioning means for the ends of the rails (6) there are several modes of embodiment, all shown in figure 5 and distinguished by the letters A, B and C.

### Case A:

In this embodiment the door (1) has a groove (1.3) in which the top part is wider with a convergent transition. The attachment element, in this case the upper end (6.2) of the window lift rail (6), is provided with the element for its attachment to the door (1), preferably being a bolt (6.2.1) or the like. It is introduced by the wide part of the groove (1.3) without requiring a great precision in its positioning. After it is inserted in the groove (1.3) its converging shape (1.3.1) forces its centering as it descends.

### Case B:

In this embodiment the configuration of the door (1) is such that it incorporates a threaded orifice (1.2.1) for the bolted union. This orifice (1.2.1) is housed in an area of the door (1) shaped as a plateau (1.2) with oblique sides.

On its part, the lower end (6.1) of the rail (6) has a drilled plate (6.1.2) with three oblique extensions (6.1.1) that can embrace the also oblique sides of the fixed support (1.2).

The three oblique plates (6.1.1) give rise to a funnel-shaped configuration that allows centering in a range determined by the inclination of the oblique sides and the height of the plates (6.1.1).

Additionally, instead of using three plates (6.1.1) it is possible to configure by stamping an extension having the same shape as the support plateau (1.2) equivalent to disposing the plates (6.1.1) connected along a continuous side with several faces.

After the positioning the threaded orifice (1.2.1) and the orifice (6.1.2) will meet.

### Case C:

This embodiment can be considered to be a combination of the previous ones. The door (1.4) (given a different reference to differentiate the various self-centering and attachment solutions) has an area with an orifice (1.5) for the bolted union and a groove (1.6) for self-centering. The attachment and self-centering functions are independent.

The groove (1.6) has a converging shape that is used by a tab (6.3) of the window lift rail (6) to facilitate the insertion through the wide part and position the rail (6) until the orifice (1.5) of the support and the orifice (6.4) of the rail (6) coincide.

### Case D:

This embodiment makes use of a means of attachment (6.5) in the rail (6), preferably a bolt, meant to enter a housing (1.7.1) of the door (1.7). This means of attachment (6.5) is guided by the housing (1.7.1) due to its grooved configuration.

In the assembly operation the means of attachment (6.5) of the rail (6) is inserted through the housing (1.7.1) until its final position (1.7.2).

In this embodiment the grooved housing (1.7.1) is oblique, so that guiding results in a small sideways and downwards displacement. In the end position (1.7.2) the housing (1.7.1) is slightly widened, allowing maintaining a stable position of the means of attachment (6.5) for a subsequent tightening.

Lastly, although the main steps for assembling the module on the door (1) have already been described when explaining the specific solutions for each component, the steps to be followed are listed below:
- If a lock (3) is included, the flexible laminar element (2) is introduced from the side so that the lock (3) passes through the frame of the door (1), the flexible laminar element (2) being slightly displaced downwards to avoid interfering with the upper part of the window lift rail (6); if the flexible laminar element (2) is not provided with a lock the side entry is not necessary,
- Rotation to insert the lock (3), if it is inserted in the flexible laminar element (2), in the sense displacing the upper part towards the housing of the lock (3) and simultaneously upwards to insert the upper part of both window lift rails (6),
- Positioning of the centerers (9) for the flexible laminar element (2) and subsequent resting of the window lift rails (6) on the door (1),
- Bolting or clipping of the flexible laminar element (2) with the central and peripheral attachments (2.2),
- Bolting the window lift rails (6),
- Bolting the lock (3),
- Passage of the cable sheath if it is incorporated in the module into the wet area,
- Placing the sealing lid on the cable sheath,
- Placing and attaching the window with the aid of the cavities (2.4) of the flexible laminar element (2),
- Placing the various sealing lids (8).

Not affecting the essence of the invention are variations in the materials, shape, size and arrangement of the component elements, described in a non-limiting manner such that it allows its reproduction by an expert.

## Claims

1. Supporting module with waterproof seal for vehicle doors with a cable window lift mechanism, **characterised in that** it consists of a flexible laminar element (2) to separate the wet area from the dry area of the door (1) and seal the mounting accesses to the inside of the door, which bears during the mounting operations on the door (1) at least the window lift mechanisms and a support spacer (2.1) that allows a structural attachment of the door handle and the door (1) itself, so that when the aforementioned flexible laminar element (2) is positioned on the door (1) all the remaining components are placed in their mounting position, and once these elements are definitively attached to the door (1) the loads to which they are subjected during their use are transmitted only to the door (1) itself.

2. Supporting module with waterproof seal for vehicle doors according to claim 1, **characterised in that** the support spacer (2.1) is integrated in the flexible laminar element (2) forming a single body with it.

3. Supporting module with waterproof seal for vehicle doors according to claim 1, **characterised in that** it incorporates a loudspeaker (4).

4. Supporting module with waterproof seal for vehicle doors according to claim 1, **characterised in that** it incorporates the lock (3) and at least the transmission mechanisms for the locking, opening and closing actions.

5. Supporting module with waterproof seal for vehicle doors according to claim 1, **characterised in that** the flexible laminar element (2) incorporates the configuration of the base of an object-carrying pouch.

6. Supporting module with waterproof seal for vehicle doors according to claim 1, **characterised in that** the flexible laminar element (2) incorporates at least one element absorbing the energy of an impact.

7. Supporting module with waterproof seal for vehicle doors according to claim 1, **characterised in that** it includes the electrical cables for the window lift motor.

8. Supporting module with waterproof seal for vehicle doors according to claim 7, **characterised in that** it incorporates the electrical accessories, such as courtesy lamps or indirect lighting.

9. Supporting module with waterproof seal for vehicle doors according to claim 1, **characterised in that** the flexible laminar element (2) provides an acoustical insulation function.

10. Supporting module with waterproof seal for vehicle doors according to claim 1, **characterised in that** the waterproof seal of the flexible laminar element (2) establishes a waterproof seal on the door (1) by means of a peripheral sealing gasket that adapts to the surface and outline of the space of the door (1 ).

11. Supporting module with waterproof seal for vehicle doors according to claim 10, **characterised in that** the peripheral sealing gasket is inserted in an also peripheral grove (2.3) of the flexible laminar element (2).

12. Supporting module with waterproof seal for vehicle doors according to claim 1, **characterised in that** the waterproof seal between the flexible laminar element (2) and the access openings for assembling the components is established by closures or lids (8).

13. Supporting module with waterproof seal for vehicle doors according to claim 12, **characterised in that** the closures or lids (8) sealing the assembly access openings are included in the flexible laminar element (2).

14. Supporting module with waterproof seal for vehicle doors according to claim 10, **characterised in that** the seal between the flexible laminar element (2) and the components and accessories that must cross from the wet to the dry area and vice versa is established by sealing gaskets.

15. Supporting module with waterproof seal for vehicle doors according to claim 14, **characterised in that** the sealing gaskets for the components and accessories that must cross from the wet to the dry area and vice versa are included in the flexible laminar element (2).

16. Supporting module with waterproof seal for vehicle doors according to claim 1, **characterised in that** the flexible laminar element (2) is attached by a bolted union (2.2) or by attachment clips integrated in the flexible laminar element (2).

17. Supporting module with waterproof seal for vehicle doors according to claim 1, **characterised in that** it is provided with attachment means for the cabling incorporated in the flexible laminar element (2) to form a single part with it.

18. Supporting module with waterproof seal for vehicle doors according to claim 1, **characterised in that** the window lift rails (6) have self-centering and attachment means on the upper ends (6.2) and lower ends (6.1).

19. Supporting module with waterproof seal for vehicle doors according to claim 18, **characterised in that** the attachment and centering means consist of a groove (1.3) on the fixed support or door (1) that is wider on one end of the groove (1.3) and narrower on the other end, with a converging transition to house a thickened widening (6.3), preferably a bolt, on the end of the rail (6).

20. Supporting module with waterproof seal for vehicle doors according to claim 18, **characterised in that** the centering and attachment means consist of a plateau (1.2) with oblique sides on the fixed support or door (1) on which rests the end (6.1) of the rail (6) according to a configuration that coincides in its shape and size with the aforementioned plateau (1.2) of the door, such that an orifice (6.1.2) coincides with the orifice (1.2.1) of the plateau (1.2) for a bolted union.

21. Supporting module with waterproof seal for vehicle doors according to claim 18, **characterised in that** the centering and attachment means consist of a plateau (1.4) on the fixed support or door (1) with an orifice (1.5) for a bolted union and a groove (1.6) that is wider on one end than on the other, having a converging transition, and a tab (6.3) and an orifice (6.4) in the rail (6), such that the tab (6.3) of the rail (6) is made to coincide in the groove (1.6) of the door (1) until the orifices of the rail (6.4) and the door (6.5) coincide.

22. Supporting module with waterproof seal for vehicle doors according to claim 18, **characterised in that** the centering and attachment means consist of a grooved housing (1.7.1) for guiding an attachment means (6.5), preferably a bolt, to a final position (1.7.2) of the grooved housing (1.7.1) where it is widened in order to maintain a stable position of the attachment means (6.5) for a subsequent tightening.

23. Mounting procedure for the supporting module with seal for vehicle doors, **characterised in that** the assembly is performed by the following sequence of operations:
- If a lock (3) is included, the flexible laminar element (2) is introduced from the side so that the lock (3) passes through the frame of the door (1), the flexible laminar element (2) being slightly displaced downwards to avoid interfering with the upper part of the window lift rail (6); if the flexible laminar element (2) is not provided with a lock the side entry is not necessary,
- Rotation to insert the lock (3), if it is inserted in the flexible laminar element (2), in the sense displacing the upper part towards the housing of the lock (3) and simultaneously upwards to insert the upper part of both window lift rails (6),
- Positioning of the centerers (9) for the flexible laminar element (2) and subsequent resting of the window lift rails (6) on the door (1),
- Bolting or clipping of the flexible laminar element (2) with the central and peripheral attachments (2.2),
- Bolting the window lift rails (6),
- Bolting the lock (3),
- Passage of the cable sheath if it is incorporated in the module into the wet area,
- Placing the sealing lid on the cable sheath,
- Placing and attaching the window with the aid of the cavities (2.4) of the flexible laminar element (2),
- Placing the various waterproof sealing lids (8).
